# EUROPÄISCHE PATENTSCHRIFT

(11) **EP 2 915 240 B1**
(45) Veröffentlichungstag und Bekanntmachung des Hinweises auf die Patenterteilung: **08.07.2020**
(21) Anmeldenummer: 14732813.2
(22) Anmeldetag: 21.05.2014
(51) Int. Cl.: H02M 3/158, H02J 7/00, B23K 9/09, B23K 9/10

(54) **VERFAHREN ZUM STEUERN EINES AKKUBETRIEBENEN SCHWEISSGERÄTS UND AKKUBETRIEBENES SCHWEISSGERÄT**
METHOD FOR CONTROLLING A BATTERY-POWERED WELDING DEVICE, AND BATTERY-POWERED WELDING DEVICE
PROCÉDÉ DE COMMANDE D'UN APPAREIL DE SOUDAGE ALIMENTE PAR UN ACCUMULATEUR ET APPAREIL DE SOUDAGE ALIMENTE PAR UN ACCUMULATEUR

(30) Priorität: 23.05.2013 AT 503522013
(43) Veröffentlichungstag der Anmeldung: 09.09.2015
(73) Patentinhaber: Fronius International GmbH, 4643 Pettenbach (AT)
(72) Erfinder: STARZENGRUBER, Andreas, A-4654 Bad Wimsbach-Neydharting (AT); SPEIGNER, Alexander, A-4560 Kirchdorf (AT)
(74) Vertreter: Sonn & Partner Patentanwälte
(86) Internationale Anmeldenummer: PCT/AT2014/050121
(87) Internationale Veröffentlichungsnummer: WO 2014/186815

(56) Entgegenhaltungen:
- EP-A1- 2 104 200
- EP-A2- 0 825 059
- EP-A2- 1 535 691
- US-A1- 2008 210 676
- US-A1- 2010 156 175

## Beschreibung

Die Erfindung betrifft ein Verfahren zum Steuern eines akkubetriebenen Schweißgeräts, wobei die von einem Akkumulator zur Verfügung gestellte Akkumulatorspannung und der Akkumulatorstrom mit Hilfe einer einen Hochsetzsteller mit zumindest einem Schalter und einen Tiefsetzsteller mit zumindest einem Schalter enthaltenden Schweißsteuerung auf einen/eine an einen Schweißbrenner gelieferten Schweißstrom und Schweißspannung geregelt werden.

Weiters betrifft die Erfindung ein akkubetriebenes Schweißgerät mit einem Akkumulator mit einer Akkumulatorspannung und einem Akkumulatorstrom und mit einer einen Hochsetzsteller mit zumindest einem Schalter und einen Tiefsetzsteller mit zumindest einem Schalter enthaltenden Schweißsteuerung zum Regeln eines/einer an einen Schweißbrenner gelieferten Schweißstromes und Schweißspannung.

Für besonders schwer zugängliche Orte, an welchen eine Schweißung vorgenommen werden soll, wie z.B. auf einem Gerüst oder auch für Schweißungen, bei denen direkte Versorgung mit elektrischer Energie unzulässig ist, wie z.B. in einem Kessel, ist die Verwendung von tragbaren akkubetriebenen Schweißgeräten besonders vorteilhaft oder essentiell. Die meisten akkubetriebenen Schweißgeräte des Standes der Technik weisen hinsichtlich der damit erzielbaren Schweißqualität Grenzen auf, da die erzielbaren Schweißleistungen und die erzielbare Dynamik gegenüber netzbetriebenen Schweißgeräten geringer ist.

Die EP 1 535 691 B1 beschreibt ein tragbares Schweißgerät mit auswechselbarem Akkumulator, der eine Kombination eines Hochsetzstellers und Tiefsetzstellers beinhaltet um einen höheren Schweißstrom und eine höhere Schweißspannung erzielen zu können. Da während des normalen Schweißbetriebs hauptsächlich der Tiefsetzsteller aktiv ist, bewirkt jedoch der vorgesehene Hochsetzsteller eine Erhöhung der Gesamtverluste des akkubetriebenen Schweißgeräts und somit eine Reduktion der Effizienz.

Die US 2010/0156175 A1 beschreibt einen Hochsetzsteller, der deaktiviert wird, wenn die Spannung unter die Batteriespannung sinkt.

Akkubetriebene Schweißgeräte sind beispielsweise auch aus der EP 1 981 676 B1, der US 2011/0114607 A1 und der US 2005/0263514 A1 bekannt.

Die Aufgabe der vorliegenden Erfindung besteht in der Schaffung eines oben genannten Verfahrens und eines oben genannten akkubetriebenen Schweißgeräts welche möglichst hohe Effizienz und Dynamik bewirken und mit welchen optimale Schweißeigenschaften erlangt werden können. Nachteile bekannter akkubetriebener Schweißgeräte sollen vermieden oder zumindest reduziert werden.

Gelöst wird die erfindungsgemäße Aufgabe in verfahrensmäßiger Hinsicht dadurch, dass der Hochsetzsteller mit Hilfe eines durch eine Schaltersteuerung gesteuerten Schalters überbrückt wird, wenn die Zwischenkreisspannung zwischen dem Hochsetzsteller und dem Tiefsetzsteller kleiner oder gleich der Akkumulatorspannung ist, und der Schalter zur Überbrückung des Hochsetzstellers geöffnet wird, wenn der Hochsetzsteller aktiviert ist und der Schweißstrom kleiner als der maximale Strom durch den Hochsetzsteller ist, und der Tiefsetzsteller deaktiviert ist. Durch die erfindungsgemäße Überbrückung des Hochsetzstellers unter bestimmten Voraussetzungen können die Verluste der Hochsetzstellerschaltung auf ein Minimum reduziert werden, wenn der Hochsetzsteller nicht benötigt wird. Für den Wirkungsgrad des Gesamtsystems sind dann lediglich die Leitendverluste des Schalters zur Überbrückung des Hochsetzstellers zu berücksichtigen. Gemäß der angegebenen Ein- und Ausschaltbedingung für den Überbrückungsschalter wird der Hochsetzsteller dann überbrückt, wenn die Zwischenkreisspannung zwischen dem Hochsetzsteller und dem Tiefsetzsteller kleiner oder gleich der Akkumulatorspannung ist. Ab diesem Grenzwert ist ein Hochsetzen der Spannung nicht mehr erforderlich, weshalb der Hochsetzsteller deaktiviert und überbrückt werden kann. Die Ausschaltbedingung für den Schalter zur Überbrückung des Hochsetzstellers ist dann gegeben, wenn der Hochsetzsteller aktiviert ist, also zum Hochsetzen der Akkuspannung erforderlich ist. Das vorliegende Steuerungsverfahren zeichnet sich durch besondere Einfachheit aus und bewirkt eine Effizienzsteigerung des akkubetriebenen Schweißgeräts. Weiters ist das Öffnen des Schalters zur Überbrückung des Hochsetzstellers vorgesehen, wenn der Schweißstrom kleiner als der maximale Strom durch den Hochsetzsteller ist und der Tiefsetzsteller deaktiviert ist. Diese Ausschaltbedingung für den Überbrückungsschalter setzt dann ein, wenn der maximale Strom, den der Hochsetzsteller liefern kann, unterschritten wird, und der Tiefsetzsteller deaktiviert ist, also der zumindest eine Schalter des Tiefsetzstellers durchgeschaltet ist.

Zur Erhöhung der Dynamik des Verfahrens zum Steuern eines akkubetriebenen Schweißgeräts ist vorgesehen, dass der Hochsetzsteller deaktiviert wird, wenn die Schweißspannung kleiner als die Akkumulatorspannung abzüglich einer bestimmten Spannung, insbesondere 2 V, ist. Diese Regelbedingung für den Hochsetzsteller ermöglicht die Deaktivierung des Hochsetzstellers, auch wenn die Zwischenkreisspannung über der Akkumulatorspannung liegt, und der Überbrückungsschalter noch eingeschaltet ist. Von Vorteil ist es weiters, wenn der Hochsetzsteller erst nach Ablauf einer bestimmten Einschaltzeit durch die oben genannte Regelbedingung deaktiviert wird. Durch diese Mindesteinschaltzeit, welche beispielsweise 10 Perioden der verwendeten Taktfrequenz betragen kann, können Schwingungen vermieden und Kondensatoren geladen werden.

Vorteilhafterweise wird der Hochsetzsteller mit Hilfe einer Regelung geregelt, indem die Zwischenkreisspannung mit einer gewünschten Schweißspannung verglichen wird, und dieser Vergleichswert und der Strom durch den Hochsetzsteller mit einem Komparator verglichen werden und der Regelung zugeführt wird. Durch den Vergleich des Regelausgangs (vom Vergleich der Zwischenkreisspannung mit der eingestellten gewünschten Schweißspannung) mit dem Hochsetzstellerstrom mit Hilfe eines analogen Komparators kann die für die geforderte Dynamik erforderliche Geschwindigkeit erzielt werden, welche bei einer digitalen Verarbeitung mittels Analog-Digitalwandler und entsprechender softwaremäßiger Verarbeitung nicht möglich wäre.

Vorzugsweise werden der zumindest eine Schalter des Hochsetzstellers und der zumindest eine Schalter des Tiefsetzstellers, welche üblicherweise durch entsprechende Feldeffekttransistoren gebildet sind, mit derselben Taktfrequenz, vorzugsweise 40 bis 50 kHz, betrieben.

Für die Dynamik des Verfahrens bzw. der Schaltung ist es von Vorteil, wenn die Zwischenkreisspannung nur während eines Teils jeder Periodendauer der Taktfrequenz gemessen wird und während des Rests jeder Periodendauer ausgewertet wird. Während der Messphase wird die Zwischenkreisspannung beispielsweise mehrfach gemessen und gemittelt und der berechnete Mittelwert dann während der Auswertungsphase ausgewertet, und die Steuerung entsprechend durchgeführt.

Der Hochsetzsteller wird vorzugsweise als Spannungsregler betrieben, wohingegen der Tiefsetzsteller vorzugsweise als Stromregler betrieben wird.

In einem normalen Schweißbetrieb wird nur der Tiefsetzsteller aktiviert und der Hochsetzsteller über den Schalter überbrückt. In diesem Fall ist die Schweißspannung bzw. Lichtbogenspannung geringer als die Akkumulatorspannung, weshalb ein Hochsetzen der Akkumulatorspannung nicht erforderlich ist. Üblicherweise reicht im normalen Schweißbetrieb eine Schweißspannung von ca. 30 V aus, sodass bei einer Akkumulatorspannung im Bereich von 50 bis 60 V ein Tiefsetzen der Akkumulatorspannung auf diese 30 V erfolgen kann. Da für eine optimale Zündung des Schweißprozesses Ausgangsspannungen von 70 bis 90 V erforderlich sind, welche somit höher als die genannte Akkumulatorspannung von 50 bis 60 V liegen, muss die Akkumulatorspannung auf den entsprechenden höheren Wert hinaufgesetzt werden. Akkumulatorspannungen kleiner 60 V haben den Vorteil, dass dabei viele sicherheitstechnische Vorkehrungen nicht benötigt werden.

Beispielsweise für das Zündverfahren werden sowohl der Hochsetzsteller als auch der Tiefsetzsteller aktiviert, was durch die Bedingung geregelt wird, wenn der gewünschte Schweißstrom kleiner als der maximale Strom durch den Hochsetzsteller ist. Das heißt, dass sowohl der Hochsetzsteller als auch der Tiefsetzsteller in jenen Lastbereichen arbeiten, in welchen der gewünschte Schweißstrom unterhalb des maximalen Stroms, den der Hochsetzsteller liefern kann, liegt.

Wenn die Kombination aus Hochsetzsteller und Tiefsetzsteller in umgekehrter Richtung betrieben wird, kann ein Laden des Akkumulators über den Ausgangspfad mit geringem Aufwand durchgeführt werden.

Die erfindungsgemäße Aufgabe wird auch durch ein oben genanntes akkubetriebenes Schweißgerät gelöst, bei dem ein Schalter zum Überbrücken des Hochsetzstellers vorgesehen ist, welcher Schalter mit einer Schaltersteuerung verbunden ist, welche Schaltersteuerung dazu ausgebildet ist, den Schalter zu schließen, wenn die Zwischenkreisspannung zwischen Hochsetzsteller und Tiefsetzsteller kleiner oder gleich der Akkumulatorspannung ist, und den Schalter zu öffnen, wenn der Hochsetzsteller aktiviert ist und der Schweißstrom kleiner als der maximale Strom durch den Hochsetzsteller ist, und der Tiefsetzsteller deaktiviert ist. Zu den dadurch erzielbaren Vorteilen wird auf die obige Beschreibung des Steuerungsverfahrens verwiesen. Die entsprechende Zusatzbeschaltung des akkubetriebenen Schweißgeräts ist relativ einfach und kostengünstig herstellbar. Der Schalter zum Überbrücken des Hochsetzstellers besteht vorzugsweise durch einen Feldeffekttransistor. Die Schaltersteuerung ist weiters dazu ausgebildet, den Schalter zur Überbrückung des Hochsetzstellers zu öffnen, wenn der Schweißstrom kleiner als der maximale Strom durch den Hochsetzsteller ist, und der Tiefsetzsteller deaktiviert ist.

Vorzugsweise ist eine Regelung für den Hochsetzsteller vorgesehen, welche dazu ausgebildet ist, den Hochsetzsteller zu deaktivieren, wenn die Schweißspannung kleiner als die Akkumulatorspannung abzüglich einer vorbestimmten Spannung, insbesondere 2 V ist. Durch diese Regelbedingung kann der Hochsetzsteller deaktiviert werden, wobei auch eine Minimaleinschaltzeit zur Vermeidung von Schwingungen für die Deaktivierung vorgesehen sein kann.

Wenn ein Komparator zum Vergleichen eines Vergleichswertes der Zwischenkreisspannung mit einer gewünschten Schweißspannung und dem Strom durch den Hochsetzsteller vorgesehen ist, welcher Komparator mit der Regelung zum Regeln des Hochsetzstellers verbunden ist, kann eine Optimierung hinsichtlich der Dynamik erzielt werden.

Von Vorteil ist es, wenn ein Akkumulator mit einer Akkumulatorspannung kleiner gleich 60 V vorgesehen ist. Durch Unterschreiten dieser Schutzkleinspannung können viele sicherheitstechnische Vorkehrungen bzw. Maßnahmen entfallen.

Wenn zwischen dem Hochsetzsteller und dem Tiefsetzsteller ein Kondensator angeordnet ist, kann der Spannungsanstieg begrenzt werden. Der Kondensator wird derart dimensioniert, dass eine Mindestkapazität gegeben ist, durch welche ein nicht allzu hoher Rippelstrom bzw. ein nicht allzu hoher Spannungsanstieg pro Periode verhindert wird. Das ist besonders relevant beim Abschalten des Hochsetzstellers. Weiters ist eine zu hohe Kapazität ungünstig, um eine schnelle Reaktion/Dynamik zu erreichen.

Der Schalter zum Überbrücken des Hochsetzstellers ist vorzugsweise durch einen Feldeffekttransistor gebildet. Dadurch können die Leitendverluste beim Durchschalten des Schalters besonders gering gehalten werden.

Der Akkumulator ist vorzugsweise durch einen Lithium-Eisenphosphat-Akkumulator gebildet, der eine besonders hohe Leistungsdichte bei gleichzeitig hoher Sicherheit aufweist und somit für die Verwendung in einem tragbaren Schweißgerät besonders geeignet ist.

Wie bereits oben erwähnt, ist es von Vorteil, wenn der Tiefsetzsteller in Gegenrichtung als Hochsetzsteller zum Laden des Akkumulators verwendbar ist.

Die vorliegende Erfindung wird anhand der beigefügten Zeichnungen näher erläutert. Darin zeigen:
Fig. 1 ein Blockschaltbild eines akkubetriebenen Schweißgeräts gemäß der vorliegenden Erfindung;
Fig. 2 ein erweitertes Blockschaltbild einer Schweißsteuerung für ein akkubetriebenes Schweißgerät der gegenständlichen Art;
Fig. 3 ein Blockschaltbild einer Ausführungsform einer Regelung eines Hochsetzstellers;
Fig. 4 ein Blockschaltbild einer Ausführungsform einer Regelung des Tiefsetzstellers;
Fig. 5 ein Zeitdiagramm zur Darstellung der Art der Ermittlung der Zwischenkreisspannung als Eingangsgröße für die Steuerung des Schalters zur Überbrückung des Hochsetzstellers; und
Fig. 6 ein Diagramm zur Veranschaulichung der verschiedenen Betriebszustände des akkubetriebenen Schweißgeräts mit der Kombination eines Hochsetzstellers und eines Tiefsetzstellers.

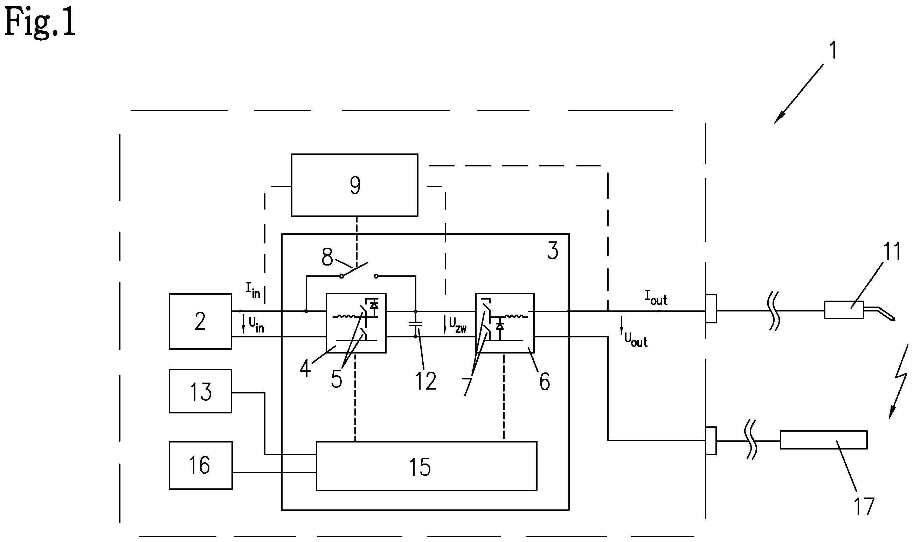

Fig. 1 zeigt ein Blockschaltbild eines akkubetriebenen Schweißgeräts 1 mit einem Akkumulator 2, der beispielsweise durch einen Lithium-Eisenphosphat-Akkumulator mit besonders hoher Leistungsdichte gebildet sein kann. Gegebenenfalls kann der Akkumulator 2 auch auswechselbar ausgebildet sein. Der Akkumulator 2 liefert eine Akkumulatorspannung Uᵢₙ und einen Akkumulatorstrom Iᵢₙ. In einer Schweißsteuerung 3 wird die vom Akkumulator 2 zur Verfügung gestellte Akkumulatorspannung Uᵢₙ und der Akkumulatorstrom Iᵢₙ auf einen entsprechenden an einen Schweißbrenner 11 gelieferten Schweißstrom Iₒᵤₜ und eine an den Schweißbrenner 11 gelieferte Schweißspannung Uₒᵤₜ geregelt. Die Ausgänge der Schweißsteuerung 3 sind mit dem Schweißbrenner 11 und dem zu schweißenden Werkstück 17 verbunden. Der gewünschte Schweißstrom Iₛₑₜ und die gewünschte Schweißspannung Uₛₑₜ werden beispielsweise über eine Eingabevorrichtung 16 eingestellt und an die Steuereinrichtung 15 übermittelt. Die Steuereinrichtung 15 liefert die entsprechenden Steuersignale für die in der Schweißsteuerung enthaltenen Komponenten, den Hochsetzsteller 4 mit zumindest einem Schalter 5 und den Tiefsetzsteller 6 mit zumindest einem Schalter 7. Die Steuereinrichtung 15 kann weiters mit einer Anzeige 13 zur Anzeige der wichtigsten Betriebsparameter oder dergleichen verbunden sein. Falls erforderlich, wird die vom Akkumulator 2 gelieferte Akkumulatorspannung Uᵢₙ über den Hochsetzsteller 4 auf einen entsprechenden höheren Wert Uₒᵤₜ verändert, im normalen Schweißbetrieb ist üblicherweise nur der Tiefsetzsteller 6 aktiv, welcher die Akkumulatorspannung Uᵢₙ auf einen entsprechend niedrigeren Wert der Schweißspannung Uₒᵤₜ verändert. Um die Verluste während des normalen Schweißbetriebs in dem nur der Tiefsetzsteller 6 der Schweißsteuerung 3 aktiv ist, zu reduzieren, ist ein Schalter 8 vorgesehen, mit Hilfe dessen der Hochsetzsteller 4 überbrückt werden kann. Die Einschaltbedingung für die Schalter 8 ist dann gegeben, wenn die Zwischenkreisspannung U_{zw} zwischen dem Hochsetzsteller 4 und dem Tiefsetzsteller 6 kleiner oder gleich der Akkumulatorspannung Uᵢₙ ist. Die Ausschaltbedingung für den Schalter 8 ist dann gegeben, wenn der Hochsetzsteller 4 durch die Steuereinrichtung 15 aktiviert wird. Ist also die Akkumulatorspannung Uᵢₙ ausreichend für den Schweißbetrieb und der Hochsetzsteller 4 nicht erforderlich, wird er von der Schaltersteuerung 9 durch den Schalter 8 überbrückt. Somit sind im normalen Schweißbetrieb nur die Leitendverluste des Schalters 8 zu berücksichtigen. Bei entsprechender Wahl des Schalters 8, insbesondere durch einen Mosfet, sind diese Verluste jedoch besonders gering. Für die Grundbedingung der Steuerung des Schalters 8 ist die Messung der Zwischenkreisspannung U_{zw} und der Akkumulatorspannung Uᵢₙ erforderlich. Zusätzlich kann auch die Ausgangsspannungen Uₒᵤₜ in die Schaltersteuerung 9 miteinbezogen werden. Üblicherweise werden die notwendigen Größen mit Analog-Digitalwandlern digitalisiert und einem in der Schaltersteuerung 9 enthaltenen Mikroprozessor bearbeitet. Zwischen dem Hochsetzsteller 4 und dem Tiefsetzsteller 6 ist üblicherweise ein Kondensator 12 vorgesehen.

Gemäß einer weiteren Ausschaltbedingung des Schalters 8 zur Überbrückung des Hochsetzstellers 4 wird der Schweißstrom Iₒᵤₜ mit dem maximalen Strom I_{b,max} durch den Hochsetzsteller 4 verglichen und der Schalter 8 dann geöffnet, wenn der Schweißstrom Iₒᵤₜ kleiner als der maximale Strom I_{b,max} durch den Hochsetzsteller 4 ist und der Tiefsetzsteller 6 deaktiviert ist.

Der Hochsetzsteller 4 wird dann deaktiviert, wenn die Schweißspannung Uₒᵤₜ kleiner als die Akkumulatorspannung Uᵢₙ abzüglich einer vorbestimmten Spannung, beispielsweise 2 V ist. In diesem Fall ist also die Schweißspannung Uₒᵤₜ bzw. die Lichtbogenspannung geringer als die Akkumulatorspannung Uᵢₙ abzüglich dem vorbestimmten Spannungswert, weshalb nur der Tiefsetzsteller arbeitet.

Die Schalter 5 und 7 des Hochsetzstellers 4 bzw. Tiefsetzstellers 6 sind vorzugsweise durch MOSFET-Effekttransistoren gebildet und werden mit der gleichen Schaltfrequenz von vorzugsweise 40 bis 50 kHz betrieben. Der Hochsetzsteller 4 wird spannungsgeregelt betrieben, wohingegen der Tiefsetzsteller 6 stromgeregelt betrieben wird.

Wenn der Tiefsetzsteller 6 in Gegenrichtung als Hochsetzsteller 4 verwendet wird, kann der Akkumulator 2 über die Anschlüsse für den Schweißbrenner 11 und das Werkstück 17 geladen werden.

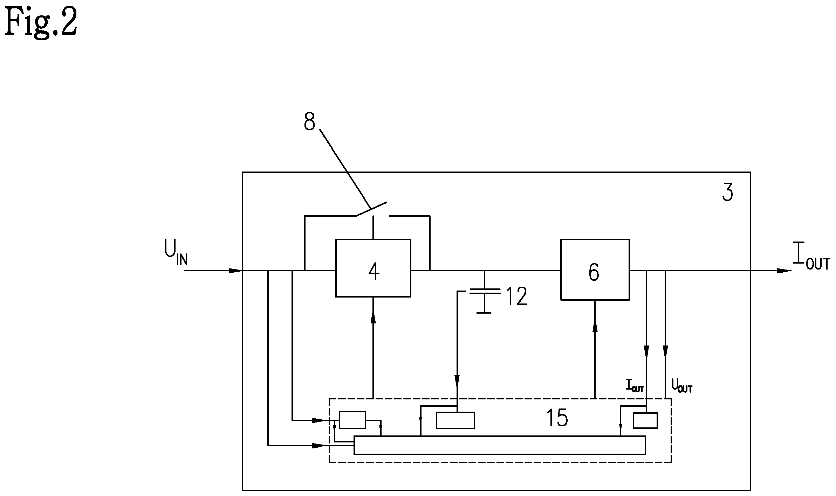

Fig. 2 zeigt ein detaillierteres Blockschaltbild der Schweißsteuerung 3 des akkubetriebenen Schweißgeräts 1, wobei die Steuereinrichtung 15 die entsprechenden Eingangsgrößen
- Uᵢₙ: Akkumulatorspannung
- I_{b}: Strom durch den Hochsetzsteller 4
- U_{zw}: Zwischenkreisspannung
- Uₒᵤₜ: Schweißspannung
- Iₒᵤₜ: Schweißstrom
- Uₛₑₜ: eingestellte bzw. gewünschte Schweißspannung
- Iₛₑₜ: eingestellter bzw. gewünschter Schweißstrom

Die entsprechenden Daten werden für die Regelung des Hochsetzstellers 4 Hardware-technisch ermittelt um die erforderliche Geschwindigkeit für eine hochdynamische Regelung erzielen zu können.

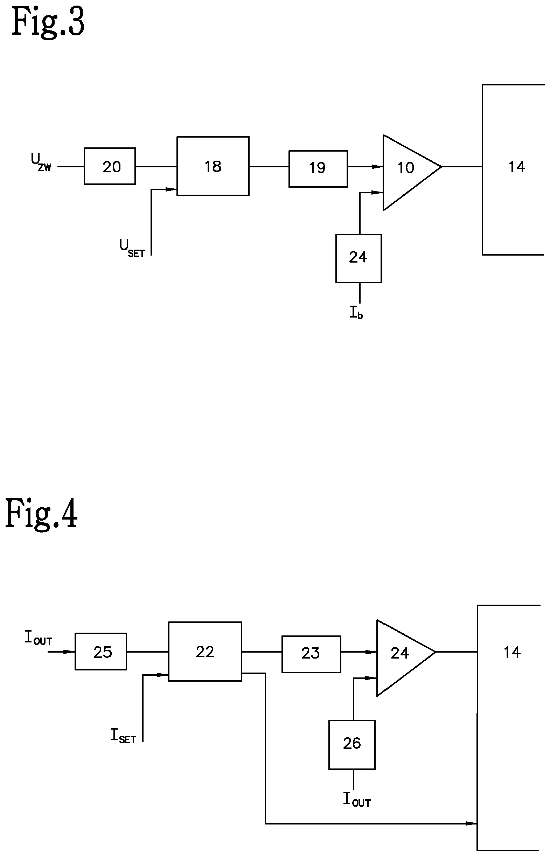

Fig. 3 zeigt ein Blockschaltbild einer Ausführungsform einer Regelung des Hochsetzstellers 4, wobei die Zwischenkreisspannung U_{zw} und die eingestellte gewünschte Schweißspannung Uₛₑₜ in einem Regelkreis 18 verglichen und in einem Digital-Analogwandler in einen analogen Vergleichswert umgewandelt wird. In einem Komparator 10 wird dieser Regelausgang und der durch den Hochsetzsteller 4 fließende Strom I_{b} verglichen und der Regelung 14 des Hochsetzstellers 4 zugeführt. Die Zwischenkreisspannung U_{zw} und der Strom I_{b} durch den Hochsetzsteller 4 können durch entsprechende Filterschaltungen 20, 21 gefiltert werden.

Fig. 4 zeigt ein Blockschaltbild einer Ausführungsform einer Regelung des Tiefsetzstellers 6 wobei die Eingangsgrößen des Schweißstroms Iₒᵤₜ und des gewünschten eingestellten Schweißstroms Iₛₑₜ einem Regler 22, welcher vorzugsweise durch einen PID-Regler gebildet ist, zugeführt werden. Ein zusätzlich generiertes Signal, welches für den maximal zulässigen Schweißstrom Iₒᵤₜ zuständig ist, wird einem Digital-Analogwandler 23 zugeführt und dann in einem Komparator 24 mit dem Schweißstrom Iₒᵤₜ analog verglichen und der Regelung 14 zugeführt. Auch hier können wieder Filter 25, 26 eingesetzt werden.

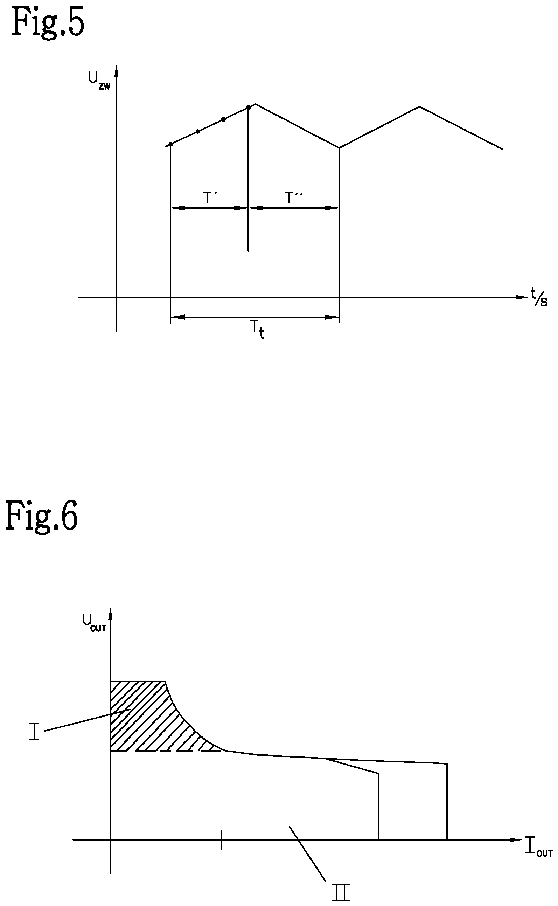

Fig. 5 zeigt ein Zeitdiagramm der Zwischenkreisspannung U_{zw} über der Zeit, wobei nur in einem Teil der Periode der Taktfrequenz fₜ die Zwischenkreisspannung U_{zw} gemessen wird. Im dargestellten Beispiel wird die Zwischenkreisspannung U_{zw} je Periode Tₜ vier mal gemessen und der Mittelwert gebildet. Aufgrund dieses Mittelwerts der Zwischenkreisspannung U_{zw} wird nach Vergleich mit der Akkumulatorspannung Uᵢₙ entschieden, ob der Schalter 8 zum Überbrücken des Hochsetzstellers 4 durchgeschaltet wird oder nicht. Der verbleibende Rest der Periodendauer Tₜ während dem die Zwischenkreisspannung U_{zw} nicht gemessen wird, verbleibt für die Auswertung. Dadurch kann eine schnelle Regelung und Abtastung erfolgen, welche sich für einen Schweißprozess mit optimaler Schweißqualität als wichtig ergeben hat.

Schließlich zeigt Fig. 6 ein Diagramm der Schweißspannung Uₒᵤₜ über dem Schweißstrom Iₒᵤₜ wobei in dem schraffiert dargestellten Bereich sowohl der Hochsetzsteller 4 als auch der Tiefsetzsteller 6 arbeiten. Im Bereich II arbeitet nur der Tiefsetzsteller 6. Dies entspricht dem normalen Schweißzustand. Die Hüllkurve gemäß Fig. 6 stellt die Maximalwerte bzw. Maximalleistung statisch bzw. dynamisch dar.

## Patentansprüche

1. Verfahren zum Steuern eines akkubetriebenen Schweißgeräts (1) wobei die von einem Akkumulator (2) zur Verfügung gestellte Ackumulatorspannung (Uᵢₙ) und der Akkumulatorstrom (Iᵢₙ) mit Hilfe einer einen Hochsetzsteller (4) mit zumindest einem Schalter (5) und einen Tiefsetzsteller (6) mit zumindest einem Schalter (7) enthaltenden Schweißsteuerung (3) auf einen/eine an einen Schweißbrenner (11) gelieferten Schweißstrom (Iₒᵤₜ) und Schweißspannung (Uₒᵤₜ) geregelt werden, **dadurch gekennzeichnet, dass** der Hochsetzsteller (4) mit Hilfe eines durch eine Schaltersteuerung (9) gesteuerten Schalters (8) überbrückt wird, wenn die Zwischenkreisspannung (U_{zw}) zwischen dem Hochsetzsteller (4) und dem Tiefsetzsteller (6) kleiner oder gleich der Akkumulatorspannung (Uᵢₙ) ist, und der Schalter (8) zur Überbrückung des Hochsetzstellers (4) geöffnet wird, wenn der Hochsetzsteller (4) aktiviert ist und der Schweißstrom (Iₒᵤₜ) kleiner als der maximale Strom (I_{b,max}) durch den Hochsetzsteller (4) ist, und der Tiefsetzsteller (6) deaktiviert ist.

2. Verfahren nach Anspruch 1, **dadurch gekennzeichnet, dass** der Hochsetzstellers (4) deaktiviert wird, wenn die Schweißspannung (Uₒᵤₜ) kleiner als die Akkumulatorspannung (Uᵢₙ) abzüglich einer vorbestimmten Spannung, insbesondere 2V, ist.

3. Verfahren nach Anspruch 1 oder 2, **dadurch gekennzeichnet, dass** der Hochsetzsteller (4) mit Hilfe einer Regelung (14) geregelt wird, indem die Zwischenkreisspannung (U_{zw}) mit einer gewünschten Schweißspannung (Uₛₑₜ) verglichen wird und dieser Vergleichswert und der Strom (I_{b}) durch den Hochsetzsteller (4) mit einem Komparator (10) verglichen werden und der Regelung (14) zugeführt wird.

4. Verfahren nach einem der Ansprüche 1 bis 3, **dadurch gekennzeichnet, dass** der zumindest eine Schalter (5) des Hochsetzstellers (4) und der zumindest eine Schalter (7) des Tiefsetzstellers (6) mit der selben Taktfrequenz (fₜ), vorzugsweise 40 bis 50 kHz betrieben werden.

5. Verfahren nach Anspruch 4, **dadurch gekennzeichnet, dass** die Zwischenkreisspannung (U_{zw}) nur während eines Teils jeder Periodendauer (Tₜ) der Taktfrequenz (fₜ) gemessen wird und während des Rests jeder Periodendauer (Tₜ) ausgewertet wird.

6. Verfahren nach einem der Ansprüche 1 bis 5, **dadurch gekennzeichnet, dass** der Hochsetzsteller (4) als Spannungsregler und bzw. oder der Tiefsetzsteller (6) als Stromregler betrieben wird.

7. Verfahren nach einem der Ansprüche 1 bis 6, **dadurch gekennzeichnet, dass** in einem normalen Schweißbetrieb nur der Tiefsetzsteller (6) aktiviert wird.

8. Verfahren nach einem der Ansprüche 1 bis 7, **dadurch gekennzeichnet, dass** sowohl der Hochsetzsteller (4) als auch der Tiefsetzsteller (6) aktiviert werden, wenn der gewünschte Schweißstrom (Iₛₑₜ) kleiner als der maximale Strom (I_{b,max}) durch den Hochsetzsteller (4) ist.

9. Verfahren nach einem der Ansprüche 1 bis 8, **dadurch gekennzeichnet, dass** der Akkumulator (2) über den in Gegenrichtung als Hochsetzsteller verwendeten Tiefsetzsteller (6) geladen wird.

10. Akkubetriebenes Schweißgerät (1) mit einem Akkumulator (2) mit einer Akkumulatorspannung (Uᵢₙ) und einem Akkumulatorstrom (Iᵢₙ) und mit einer einen Hochsetzsteller (4) mit zumindest einem Schalter (5) und einen Tiefsetzsteller (6) mit zumindest einem Schalter (7) enthaltenden Schweißsteuerung (3) zum Regeln eines/einer an einen Schweißbrenner (11) gelieferten Schweißstromes (Iₒᵤₜ) und Schweißspannung (Uₒᵤₜ), **dadurch gekennzeichnet, dass** ein Schalter (8) zum Überbrücken des Hochsetzstellers (4) vorgesehen ist, welcher Schalter (8) mit einer Schaltersteuerung (9) verbunden ist, welche Schaltersteuerung (9) dazu ausgebildet ist, den Schalter (8) zu schließen, wenn die Zwischenkreisspannung (U_{zw}) zwischen Hochsetzsteller (4) und Tiefsetzsteller (6) kleiner oder gleich der Akkumulatorspannung (Uᵢₙ) ist, und den Schalter (8) zu öffnen, wenn der Hochsetzsteller (4) aktiviert ist und der Schweißstrom (Iₒᵤₜ) kleiner als der maximale Strom (I_{b,max}) durch den Hochsetzsteller (4) ist, und der Tiefsetzsteller (6) deaktiviert ist.

11. Akkubetriebenes Schweißgerät (1) nach Anspruch 10, **dadurch gekennzeichnet, dass** eine Regelung (14) für den Hochsetzsteller (4) vorgesehen ist, welche dazu ausgebildet ist, den Hochsetzsteller (4) zu deaktivierten, wenn die Schweißspannung (Uₒᵤₜ) kleiner als die Akkumulatorspannung (Uᵢₙ) abzüglich einer vorbestimmten Spannung, insbesondere 2V, ist.

12. Akkubetriebenes Schweißgerät (1) nach Anspruch 11, **dadurch gekennzeichnet, dass** ein Komparator (10) zum Vergleichen eines Vergleichswerts der Zwischenkreisspannung (U_{zw}) mit einer gewünschten Schweißspannung (Uₛₑₜ) und dem Strom (I_{b}) durch den Hochsetzsteller (4) vorgesehen ist, welcher Komparator (10) mit der Regelung (14) zum Regeln des Hochsetzstellers (4) verbunden ist.

13. Akkubetriebenes Schweißgerät (1) nach einem der Ansprüche 10 bis 12, **dadurch gekennzeichnet, dass** der Akkumulator (2) durch einen Lithium-Eisenphosphat-Akkumulator gebildet ist und vorzugsweise eine Akkumulatorspannung (Uᵢₙ) kleiner gleich 60 V aufweist.

14. Akkubetriebenes Schweißgerät (1) nach einem der Ansprüche 10 bis 13, **dadurch gekennzeichnet, dass** zwischen Hochsetzsteller (4) und Tiefsetzsteller (6) ein Kondensator (12) angeordnet ist.

15. Akkubetriebenes Schweißgerät (1) nach einem der Ansprüche 10 bis 14, **dadurch gekennzeichnet, dass** der Tiefsetzsteller (6) in Gegenrichtung betrieben als Ladeschaltung zum Laden des Akkumulators (2) verwendbar ist.

## Claims

1. Method for controlling a battery-operated welding device (1), the accumulator voltage (Uᵢₙ) and the accumulator current (Iᵢₙ) provided by an accumulator (2) being regulated to a welding current (Iₒᵤₜ) and welding voltage (Uₒᵤₜ), supplied to a welding torch (11), by means of a welding controller (3) that contains a step-up converter (4) having at least one switch (5) and a step-down converter (6) having at least one switch (7), **characterised in that** the step-up converter (4) is bridged with the aid of a switch (8) controlled by a switch controller (9) when the intermediate circuit voltage (U_{zw}) between the step-up converter (4) and the step-down converter (6) is less than or equal to the accumulator voltage (Uᵢₙ), and the switch (8) for bridging the step-up converter (4) is opened when the step-up converter (4) is activated and the welding current (Iₒᵤₜ) is less than the maximum current (I_{b,max}) through the step-up converter (4), and the step-down converter (6) is deactivated.

2. Method according to claim 1, **characterised in that** the step-up converter (4) is deactivated when the welding voltage (Uₒᵤₜ) is less than the accumulator voltage (Uᵢₙ) minus a predetermined voltage, in particular 2V.

3. Method according to either claim 1 or claim 2, **characterised in that** the step-up converter (4) is regulated with the aid of a regulator (14) by comparing the intermediate circuit voltage (U_{zw}) with a target welding voltage (Uₛₑₜ) and this comparison value and the current (I_{b}) through the step-up converter (4) are compared by a comparator (10) and supplied to the regulator (14).

4. Method according to any of claims 1 to 3, **characterised in that** the at least one switch (5) of the step-up converter (4) and the at least one switch (7) of the step-down converter (6) are operated at the same clock frequency (fₜ), preferably 40 to 50 kHz.

5. Method according to claim 4, **characterised in that** the intermediate circuit voltage (U_{zw}) is measured only during part of each period (Tₜ) of the clock frequency (fₜ) and is evaluated during the remainder of each period (Tₜ).

6. Method according to any of claims 1 to 5, **characterised in that** the step-up converter (4) is operated as a voltage regulator and/or the step-down converter (6) is operated as a current regulator.

7. Method according to any of claims 1 to 6, **characterised in that** only the step-down converter (6) is activated in a normal welding operation.

8. Method according to any of claims 1 to 7, **characterised in that** both the step-up converter (4) and the step-down converter (6) are activated when the target welding current (Iₛₑₜ) is less than the maximum current (I_{b,max}) through the step-up converter (4).

9. Method according to any of claims 1 to 8, **characterised in that** the accumulator (2) is charged via the step-down converter (6) used in the opposite direction as a step-up converter.

10. Battery-operated welding device (1) comprising an accumulator (2) having an accumulator voltage (Uᵢₙ) and an accumulator current (Iᵢₙ), and comprising a welding controller (3) containing a step-up converter (4) having at least one switch (5) and a step-down converter (6) having at least one switch (7) for regulating a welding current (Iₒᵤₜ) and welding voltage (Uₒᵤₜ) supplied to a welding torch (11), **characterised in that** a switch (8) is provided for bridging the step-up converter (4), which switch (8) is connected to a switch controller (9), which switch controller (9) is designed to close the switch (8) when the intermediate circuit voltage (U_{zw}) between the step-up converter (4) and the step-down converter (6) is less than or equal to the accumulator voltage (Uᵢₙ), and to open the switch (8) when the step-up converter (4) is activated and the welding current (Iₒᵤₜ) is less than the maximum current (I_{b,max}) through the step-up converter (4), and the step-down converter (6) is deactivated.

11. Battery-operated welding device (1) according to claim 10, **characterised in that** a regulator (14) for the step-up converter (4) is provided, which regulator is designed to deactivate the step-up converter (4) when the welding voltage (Uₒᵤₜ) is less than the accumulator voltage (Uᵢₙ) minus a predetermined voltage, in particular 2V.

12. Battery-operated welding device (1) according to claim 11, **characterised in that** a comparator (10) is provided for comparing a comparison value of the intermediate circuit voltage (U_{zw}) with a target welding voltage (Uₛₑₜ) and the current (I_{b}) through the step-up converter (4), which comparator (10) is connected to the regulator (14) for regulating the step-up converter (4).

13. Battery-operated welding device (1) according to any of claims 10 to 12, **characterised in that** the accumulator (2) is formed by a lithium iron phosphate accumulator and preferably has an accumulator voltage (Uₙ) less than or equal to 60 V.

14. Battery-operated welding device (1) according to any of claims 10 to 13, **characterised in that** a capacitor (12) is arranged between the step-up converter (4) and the step-down converter (6).

15. Battery-operated welding device (1) according to any of claims 10 to 14, **characterised in that** the step-down converter (6) operated in the opposite direction can be used as a charging circuit for charging the accumulator (2).

## Revendications

1. Procédé de commande d'un appareil de soudage (1) alimenté par accumulateur, dans lequel la tension d'accumulateur (Uᵢₙ) et le courant d'accumulateur (Iᵢₙ) mis à disposition par un accumulateur (2) sont, à l'aide d'une commande de soudage (3) comprenant un convertisseur élévateur (4) ayant au moins un commutateur (5) et un convertisseur abaisseur (6) ayant au moins un commutateur (7), réglés sur un courant de soudage (Iₒᵤₜ) et sur une tension de soudage (Uₒᵤₜ) fournis à un chalumeau de soudage (11), **caractérisé en ce que** le convertisseur élévateur (4) est ponté à l'aide d'un commutateur (8) commandé par une commande de commutateur (9) quand la tension du circuit intermédiaire (U_{zw}) entre le convertisseur élévateur (4) et le convertisseur abaisseur (6) est inférieure ou égale à la tension d'accumulateur (Uᵢₙ), et le commutateur (8) est ouvert pour le pontage du convertisseur élévateur (4) quand le convertisseur élévateur (4) est activé et le courant de soudage (Iₒᵤₜ) est inférieur au courant maximal (I_{b,max}) traversant le convertisseur élévateur (4), et le convertisseur abaisseur (6) est désactivé.

2. Procédé selon la revendication 1, **caractérisé en ce que** le convertisseur élévateur (4) est désactivé quand la tension de soudage (Uₒᵤₜ) est inférieure à la tension d'accumulateur (Uᵢₙ) moins une tension prédéfinie, en particulier 2 V.

3. Procédé selon la revendication 1 ou 2, **caractérisé en ce que** le convertisseur élévateur (4) est réglé à l'aide d'un régulateur (14) par la comparaison de la tension du circuit intermédiaire (U_{zw}) à une tension de soudage (Uₛₑₜ) souhaitée, cette valeur de comparaison et le courant (Ib) traversant le convertisseur élévateur (4) étant comparés avec un comparateur (10) et conduits au régulateur (14).

4. Procédé selon l'une des revendications 1 à 3, **caractérisé en ce que** l'au moins un commutateur (5) du convertisseur élévateur (4) et l'au moins un commutateur (7) du convertisseur abaisseur (6) sont mis en œuvre avec la même fréquence d'horloge (fₜ), de préférence de 40 à 50 kHz.

5. Procédé selon la revendication 4, **caractérisé en ce que** la tension du circuit intermédiaire (U_{zw}) n'est mesurée que pendant une partie de chaque durée de période (Tₜ) de la fréquence d'horloge (fₜ) et est analysée pendant le reste de chaque durée de période (Tt).

6. Procédé selon l'une des revendications 1 à 5, **caractérisé en ce que** le convertisseur élévateur (4) est mis en œuvre en tant que régulateur de tension et, respectivement ou, le convertisseur abaisseur (6) est mis en œuvre en tant que régulateur de courant.

7. Procédé selon l'une des revendications 1 à 6, **caractérisé en ce que**, dans un mode de soudage normal, seul le convertisseur abaisseur (6) est activé.

8. Procédé selon l'une des revendications 1 à 7, **caractérisé en ce que** aussi bien le convertisseur élévateur (4) que le convertisseur abaisseur (6) sont activés quand le courant de soudage (Iₛₑₜ) souhaité est inférieur au courant maximal (I_{b,max}) traversant le convertisseur élévateur (4).

9. Procédé selon l'une des revendications 1 à 8, **caractérisé en ce que** l'accumulateur (2) est chargé par le biais du convertisseur abaisseur (6) utilisé en sens inverse en tant que convertisseur élévateur.

10. Appareil de soudage (1) alimenté par accumulateur, avec un accumulateur (2) ayant une tension d'accumulateur (Uᵢₙ) et un courant d'accumulateur (Iᵢₙ), et avec une commande de soudage (3), comprenant un convertisseur élévateur (4) ayant au moins un commutateur (5) et un convertisseur abaisseur (6) ayant au moins un commutateur (7), pour la régulation d'un courant de soudage (Iₒᵤₜ) et d'une tension de soudage (Uₒᵤₜ) fournis à un chalumeau de soudage (11), **caractérisé en ce qu'**un commutateur (8) est prévu pour le pontage du convertisseur élévateur (4), lequel commutateur (8) est raccordé à une commande de commutateur (9), laquelle commande de commutateur (9) est destinée à fermer le commutateur (8) quand la tension du circuit intermédiaire (U_{zw}) entre le convertisseur élévateur (4) et le convertisseur abaisseur (6) est inférieure ou égale à la tension d'accumulateur (Uᵢₙ), et pour ouvrir le commutateur (8) quand le convertisseur élévateur (4) est activé et le courant de soudage (Iₒᵤₜ) est inférieur au courant maximal (I_{b,max}) traversant le convertisseur élévateur (4), et le convertisseur abaisseur (6) est désactivé.

11. Appareil de soudage (1) alimenté par accumulateur selon la revendication 10, **caractérisé en ce qu'**un régulateur (14) est prévu pour le convertisseur élévateur (4), lequelest destiné à désactiver le convertisseur élévateur (4) quand la tension de soudage (Uₒᵤₜ) est inférieure à la tension d'accumulateur (Uᵢₙ) moins une tension prédéfinie, en particulier 2 V.

12. Appareil de soudage (1) alimenté par accumulateur selon la revendication 11, **caractérisé en ce qu'**il est prévu un comparateur (10) destiné à la comparaison d'une valeur de comparaison de la tension du circuit intermédiaire (U_{zw}) avec une tension de soudage (Uₛₑₜ) souhaitée et avec le courant (I_{b}) traversant le convertisseur élévateur (4), lequel comparateur (10) est raccordé au régulateur (14) destinée à la régulation du convertisseur élévateur (4).

13. Appareil de soudage (1) alimenté par accumulateur selon l'une des revendications 10 à 12, **caractérisé en ce que** l'accumulateur (2) est formé par un accumulateur lithium-phosphate de fer et présente de préférence une tension d'accumulateur (Uᵢₙ) inférieure ou égale à 60 V.

14. Appareil de soudage (1) alimenté par accumulateur selon l'une des revendications 10 à 13, **caractérisé en ce qu'**un condensateur (12) est disposé entre le convertisseur élévateur (4) et le convertisseur abaisseur (6).

15. Appareil de soudage (1) alimenté par accumulateur selon l'une des revendications 10 à 14, **caractérisé en ce que** le convertisseur abaisseur (6) est adapté pour être mis en oeuvre en sens inverse en tant que circuit de charge pour le chargement de l'accumulateur (2).
